# EUROPEAN PATENT APPLICATION

(11) **EP 1 441 353 A1**
(43) Date of publication of application: **28.07.2004**
(21) Application number: 04000765.0
(22) Date of filing: 15.01.2004
(51) Int. Cl.: G11B 27/11, G11B 27/00

(54) **Reproduction apparatus**

(30) Priority: 23.01.2003 JP 2003015126
(71) Applicant: Orion Electric Co., Ltd., Takefu-shi, Fukui (JP)
(72) Inventor: Nishitani, Kimio, Takefu-shi Fukui (JP)
(74) Representative: Kirschner, Klaus Dieter, Dipl.-Phys.

(57) **Abstract**

A reproduction apparatus for reproducing data recorded on a recording medium, comprises special reproduction means for executing special reproduction of reproducing the data at a different speed from a speed for normal reproduction; storage means for storing a reproduction position at start of the special reproduction; and reproduction means for executing the normal reproduction from the reproduction position.

## Description

The present invention relates to a reproduction apparatus capable of performing special reproduction of data such as a video or a music recorded on a recording medium.

A reproduction apparatus that reproduces data such as a video or a music recorded on a randomly accessible recording medium such as a DVD or a hard disk can perform not only normal reproduction but also special reproduction for reproducing data at a speed different from a speed for the normal reproduction. A reproduction apparatus that employs a magnetic tape as the recording medium can similarly perform the special reproduction.

The special reproduction is high-speed reproduction or low-speed reproduction such as rapid traverse (FF), rapid return (REW), rapid traverse reproduction (CUE), rapid return reproduction (REV), slow reproduction (SLOW), and frame skip (SKIP).

A user operates the special reproduction if search is conducted during, for example, reproduction. However, there are cases where after the special reproduction is executed, the user wants to view or listen to the data thoroughly by returning a position of the data to a reproduction position at which the special reproduction is started. There are cases where if the special reproduction is erroneously executed during the reproduction, it is necessary to return the position of the data to the reproduction position before the special reproduction is executed.

In such cases, the special reproduction is stopped, rapid traverse, rapid return, or the like is performed by manual operation, and the position is returned to the reproduction position before the start of the special reproduction. At this time, the user searches the reproduction position while viewing or listening to the reproduced video or the like or while checking a counter.

Japanese Patent Application Publication Laid-Open No. 2002-112201 (paragraph 0009) discloses that an interrupt position at which the reproduction is interrupted is stored and the reproduction is automatically started at the interrupt position. Japanese Patent Application Publication Laid-Open No. 11-213636 (paragraph 0010) discloses that a reproduction start position and a reproduction end position are set during the reproduction and data corresponding to an interval between the reproduction start position and the reproduction end position is repeatedly reproduced.

According to each of Patent Documents, the reproduction position at the start of resume reproduction or repeat reproduction is stored and the data is automatically reproduced at the reproduction position. However, the techniques are not for returning a state of the data to a state before the special reproduction is executed.

It disadvantageously takes labor and time to return the position of the data to the reproduction position for the special reproduction by manual operation. Besides, it is disadvantageously difficult to accurately find out the reproduction position. Since the rapid traverse and the rapid return, in particular, are accelerated, it is disadvantageously, almost impossible to stop the data at the reproduction position. Further, since the slow reproduction is decelerated, it disadvantageously takes lots of time to reach the reproduction position.

It is an object of the present invention to provide a reproduction apparatus capable of easily, accurately returning a state of data to a state before special reproduction is executed.

This object is achieved by the apparatus of claim 1. Advantageous embodiments of the invention are characterized in the sub-claims.

According to one aspect of the present invention, there is provided a reproduction apparatus for reproducing data recorded on a recording medium, comprising: special reproduction means for executing special reproduction of reproducing the data at a different speed from a speed for normal reproduction; storage means for storing a reproduction position at start of the special reproduction; and reproduction means for executing the normal reproduction from the reproduction position.

If the special reproduction is executed, labor for searching the reproduction position is saved by storing the reproduction position at the start of the reproduction. Therefore, after executing the special reproduction, it is easy to return the state of the data to the state before the special reproduction is executed and reproduce the data from the reproduction position.

If the special reproduction is finished, the user is allowed to select whether the position of the data is moved to the reproduction position at the start of the special reproduction, whereby it is possible to satisfy user's desire to return the state of the data to the state before the special reproduction is executed. Specifically, input means for instructing movement of the position of the data to the reproduction position after the special reproduction is started. In response to the instruction of the input means, normal reproduction is performed from the reproduction position. Without the instruction, the special reproduction is stopped or the normal reproduction is continuously performed.

The storage means deletes the stored reproduction position when the special reproduction is executed subsequently. By doing so, unless the subsequent special reproduction is performed, the reproduction position is stored. Therefore, the position of the data can be always moved to the reproduction position at the start of the special reproduction.

The number of stored reproduction positions is not limited to one but the reproduction positions at which the special reproduction is executed by as much as a predetermined number may be stored. If the predetermined number of reproduction positions are stored, the reproduction position at the time the oldest special reproduction is performed is deleted when the special reproduction is newly executed. By thus storing a plurality of reproduction positions, it is possible to return the state of the data to the state before the initial special reproduction is executed when the special reproduction is continuously executed.

Preferred aspects of the invention are summerized as follows. After special reproduction is executed, a position of data is promptly returned to a reproduction position at the start of the special reproduction by simple operation and normal reproduction is started at this reproduction position. If the special reproduction is executed during the normal reproduction, the special reproduction is started after the reproduction position at the start of the special reproduction is stored in a memory. If a point key is input while the special reproduction is being executed, after the special reproduction is stopped, or while the normal reproduction is being executed after the special reproduction is stopped, the reproduction position is read from the memory. The normal reproduction is started after moving the position of the data to this reproduction position.

Advantageous embodiments of the invention are now described with reference to the drawings in which:
Fig. 1 is a schematic block diagram of a recording reproduction apparatus in one embodiment of the present invention; and
Fig. 2 is a flow chart for returning a state of data to a state before special reproduction is executed.

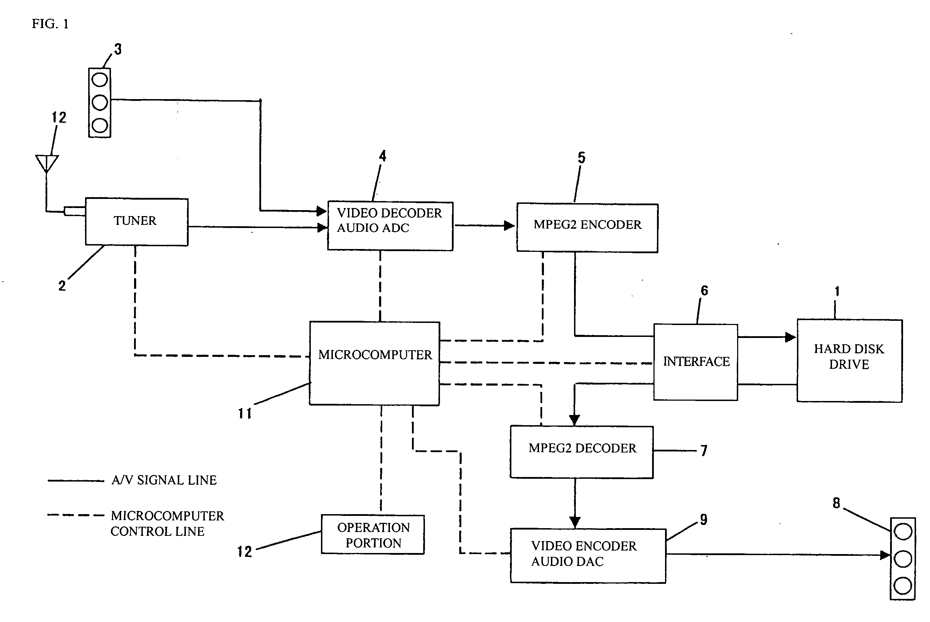

Fig. 1 illustrates a recording and reproduction apparatus in one embodiment of the present invention. The recording and reproduction apparatus employs a hard disk as a recording medium, and includes a hard disk drive 1 that reads and writes data from and to the hard disk, a video decoder 4 that converts an analog video signal input from a tuner 2 or an external input terminal 3 to a non-compressed digital video signal, an encoder 5 that compresses the digital video signal according to the MPEG2 scheme, a disk driver interface 6 that inputs and outputs the compressed video signal data to and from the hard disk drive 1, a decoder 7 that expands the compressed video signal data and obtains the digital video signal, a video encoder 9 that converts the digital video signal to an analog video signal and that outputs the analog video signal to an external output terminal 8, an operation portion 10 such as a remote controller and a main body panel that inputs commands for various settings, channel selection, reproduction, and the like, and a control portion 11 consisting of a microcomputer that drives and controls the constituent elements of the apparatus. It is assumed herein that the video signal is a signal including a voice signal.

If data is to be recorded, the operation portion 10 selects a channel and the tuner 2 receives signal from a terrestrial broadcast or a satellite broadcast on the selected channel through an antenna 12. The tuner 2 also receives a signal from a cable network or an external equipment connected to the external input terminal 3. The video decoder 4 and the encoder 5 process the received analog video signal according to a predetermined scheme. The hard disk drive 1 records the signal-processed data in the hard disk as a file.

If data is to be reproduced, the hard disk drive 1 calls the data of the file selected by the operation portion 10 from the hard disk. The decoder 7 and the video encoder 9 process the data according to a predetermined scheme into an analog video signal. This analog video signal is output to an output device such as a television set or a monitor connected to the external output terminal 8, whereby the user can view or listen to the data on the screen of the output device or through a loudspeaker.

The control portion 11 functions to execute not only normal reproduction but also special reproduction of reproducing the data at a different speed from that for normal reproduction such as the rapid traverse reproduction, the rapid return reproduction, the slow reproduction, and the frame skip. The control portion 11 also functions to return a state of the data to a state before the special reproduction is executed so as to deal with the erroneous execution of the special reproduction or the cancellation thereof. Namely, the control portion 11 stores a reproduction position at the start of the special reproduction in a memory when the special reproduction is executed. The operation portion 10 is provided with a point key for pointing out a position of the data so as to return the position of the data to the reproduction position. If the point key is operated during the special reproduction or after the special reproduction, the control portion 11 controls the operation portion 10 to start normal reproduction at the reproduction position stored in the memory. The reproduction position is specified based on position information such as time, an address, and a counter. These pieces of position information are stored in a RAM of the microcomputer, whereby the control portion 11 stores the reproduction position. The reproduction position thus stored is not deleted until the special reproduction is executed subsequently.

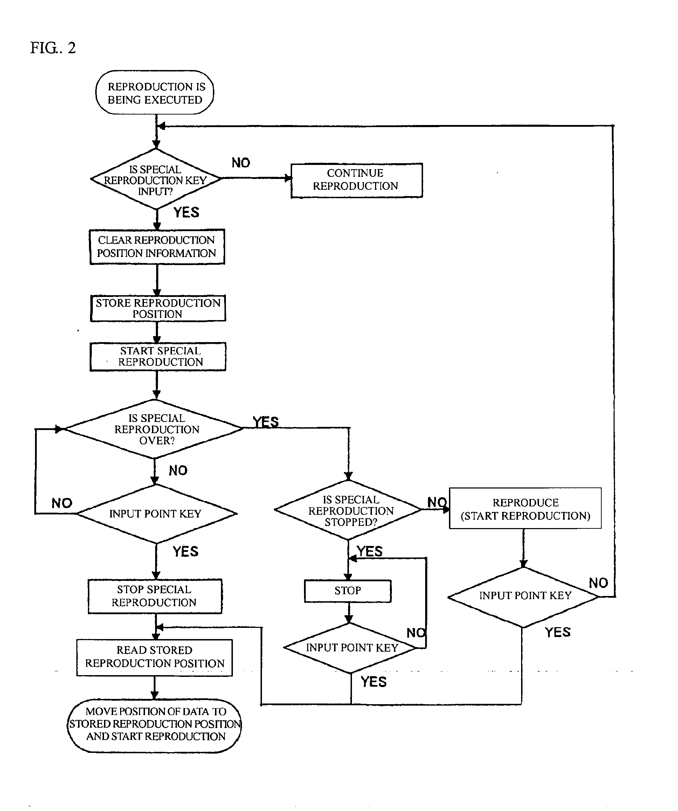

The operation of the recording and reproduction apparatus during the special reproduction will be described with reference to Fig. 2. If one of special reproduction keys is input from the operation portion 10 during the normal reproduction, reproduction position information stored in the RAM is cleared and a present reproduction position is stored therein as a new reproduction position. The special reproduction is then started.

During the execution of the special reproduction, the control portion 11 monitors whether a stop key or a reproduction key is input from the operation portion 10. If there is no such key input and the point key is input while the special reproduction is being executed, the control portion 11 stops the special reproduction and reads the reproduction position stored in the RAM. The position of the data is moved to this reproduction position and the normal reproduction is started at the position.

If the stop key is input during the execution of the special reproduction, the special reproduction is stopped. If the special reproduction is executed up to a start position or an end position of the file, the special reproduction is also stopped automatically. Thereafter, if the point key is input, the position of the data is moved to the reproduction position at the start of the special reproduction and the normal reproduction is started at the position.

If the reproduction key is input during the execution of the special reproduction, the special reproduction is stopped and the normal reproduction is then started. If the point key is input during this normal reproduction, the position is moved to the reproduction position at the start of the special reproduction and the normal reproduction is started at the position.

If the skip reproduction, one of the special reproduction methods, of reproducing the data while skipping commercials is executed, a skip operation is performed for arbitrary time and the special reproduction is finished. Thereafter, the reproduction is automatically started. Even in this case, if the point key is input after the start of the normal reproduction, the position of the data is moved to the reproduction position at the start of the special reproduction and the normal reproduction is started at the position.

After executing the special reproduction as stated above, the position can be automatically moved to the reproduction position before the special reproduction is executed by one-touch operation. Therefore, if the user views or listen to the data where left off after the special reproduction is executed so as to search a previous scene or if the special reproduction is erroneously executed due to an erroneous operation, the state of the data can be promptly returned to the state before the special reproduction is executed.

Needless to say, the present invention is not limited to the embodiment stated above and many changes and modifications can be made to the embodiment within the scope of the present invention. In this embodiment, the reproduction apparatus has a recording function. Alternatively, the reproduction apparatus may be reproduction-dedicated equipment. The recording medium is not limited to the hard disk but may be a DVD, a CD, a semiconductor memory, or a magnetic tape. As the memory that stores the reproduction position, a nonvolatile memory such as an EEPROM or a recording medium may be employed. With the nonvolatile memory or the recording medium employed as the memory, even if the apparatus is turned off, the reproduction position at the start of the special reproduction is stored in the memory. Therefore, the nonvolatile memory or the recording medium is suited for a case where the reproduction is temporarily interrupted and restarted at the reproduction position at the start of the special reproduction.

Furthermore, if the special reproduction is executed a plurality of times, the reproduction position at each time is stored. Namely, even if the special reproduction is executed subsequently, the reproduction position at the previous time is not deleted. It is preferable that the number of stored reproduction positions is limited. If the point key is operated, the position of the data is moved to the reproduction position at the start of the current special reproduction. If the point key is further operated, the position is moved to the reproduction position at the start of the previous special reproduction. The reproduction positions thus stored are called in a temporal order, whereby the position is moved one by one. Alternatively, the number of times of operating the point key may be counted and the position may be moved to the reproduction position according to the number of times. By doing so, if the special reproduction is executed continuously a plurality of times, the position can be moved up to the first reproduction position and the convenience of the user is improved. In addition, if the existing key is used as input means in place of the point key and there is an input by an operation different from the normal operation such as continuous operation of the existing key or operation of a combination of a plurality of keys, the position may be moved to the reproduction position at the start of the special reproduction.

As is obvious from the description given so far, according to the present invention, even if the special reproduction is executed, the position of the data can be automatically moved to the reproduction position at the start of the reproduction. Therefore, as compared with the manual operation, it is possible to save labor and time for operation. Accordingly, it is possible to promptly deal with user's desire to return the state of the data to the state before the special reproduction is executed and to reproduce the data and it is thereby possible to realize the user-friendly reproduction apparatus.

## Claims

1. A reproduction apparatus for reproducing data recorded on a recording medium, comprising:
special reproduction means for executing special reproduction of reproducing the data at a different speed from a speed for normal reproduction;
storage means for storing a reproduction position at start of the special reproduction; and
reproduction means for executing the normal reproduction from the reproduction position.

2. A reproduction apparatus for reproducing data recorded on a recording medium, comprising:
special reproduction means for executing special reproduction of reproducing the data at a different speed from a speed for normal reproduction;
storage means for storing a reproduction position at start of the special reproduction if the special reproduction is executed;
input means for indicating movement of a position of the data to the reproduction position after the special reproduction is started; and
reproduction means for executing the normal reproduction from the reproduction position in response to an instruction of the input means.

3. The reproduction apparatus according to claim 1 or 2, wherein
the storage means deletes the stored reproduction position when the special reproduction is executed subsequently.
